Europäisches Patentamt

European Patent Office

Office européen des brevets

(11) Publication number: 0 493 753 A2

# EUROPEAN PATENT APPLICATION

(21) Application number: 91121875.8

(22) Date of filing: 19.12.91

(51) Int. Cl.5: G05B 19/41, G05B 19/405

(30) Priority: 29.12.90 JP 416257/90

(43) Date of publication of application:
08.07.92 Bulletin 92/28

(84) Designated Contracting States:
DE FR GB

(71) Applicant: SONY CORPORATION
7-35, Kitashinagawa 6-chome Shinagawa-ku
Tokyo(JP)

(72) Inventor: Sasaki, Nobuo
c/o Sony Corporation 7-35 Kitashinagawa
6-chome
Shinagawa-ku Tokyo(JP)
Inventor: Kuragano, Tetsuzo
c/o Sony Corporation 7-35 Kitashinagawa
6-chome
Shinagawa-ku Tokyo(JP)

(74) Representative: Körber, Wolfhart, Dr. Dipl.-Ing.
et al
Patentanwälte Mitscherlich & Partner
Steinsdorfstrasse 10
W-8000 München 22(DE)

(54) Free curved surface producing method.

(57) In a method for producing free curved surfaces for cutting a workpiece (3) into a free curved surface contour on the basis of a free curved surface data representing the contour of a free curved surface, when a tool (5) is caused to approach the starting point of machining for target contour (SC) on the workpiece, the moving direction of the tool reaching the starting point of machining is determined such that it substantially coincides the tool's starting direction for machining whereby an approach path is provided through which an excessive cutting is avoided at the starting point of machining, and such approach path is corrected on the basis of a tool path that has been prepared correspondingly to the cutting target contour (SC) on the workpiece so as not to cause a tool interference whereby an approach path of the tool (5) may be achieved through which an excessive cutting is avoided at the starting point of machining and a tool interference does not occur.

FIG. 1

## BACKGROUND OF THE INVENTION

The present invention relates to a free curved surface producing method, and more particularly relates to a method suitable for use in producing a free curved surface by a numerically controlled machine tool.

For example, in a case where the technique of CAD is used to design the geometric shape of an object having a free curved surface (geometric modeling), the designer normally specifies a plurality of points in a three-dimensional space to be passed by such a surface (hereinafter referred to as nodal points) and uses desired vector functions to allow the calculation of a boundary curvilinear network which connects the specified nodal points so as to prepare a curved surface represented by a so-called wire-frame. Thus formed are a number of framed spaces surrounded by boundary curves (such processing referred to as framing process).

The boundary curvilinear network formed by such framing process by itself represents the rough geometry of what the designer intends to design, and, if it is possible to interpolate the curved surface which may be represented by predefined vector functions using the curved lines bounding the framing spaces, the entire free curved surface (referring to one that cannot be defined by quadratic function) designed by the designer may be generated. Here, a curved surface assigned to each framing space forms a fundamental element in constituting the entire curved surface and is referred to as a patch.

In order to give a more natural contour as a whole to the generated free curved surface, a method of forming free curved surface has been proposed (US Patent No. 4,789,931) in which control side vectors near a common boundary are redetermined so that patches satisfying the continuity of tangential planes at such common boundary are assigned to the two adjoining framing spaces interposing that common boundary.

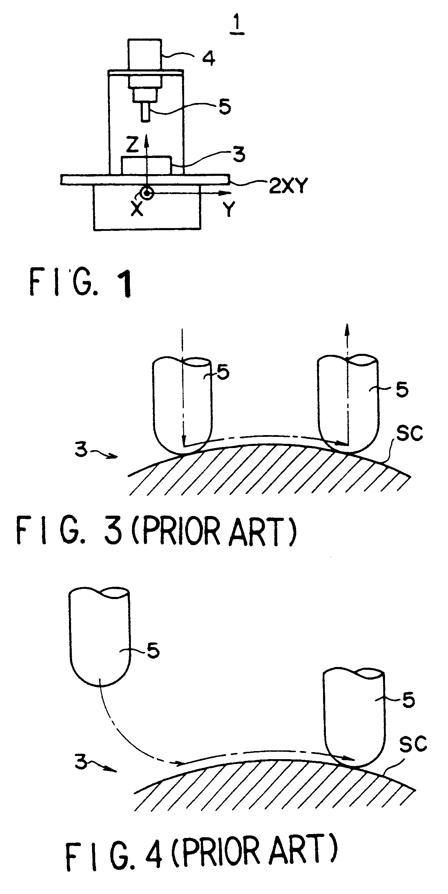

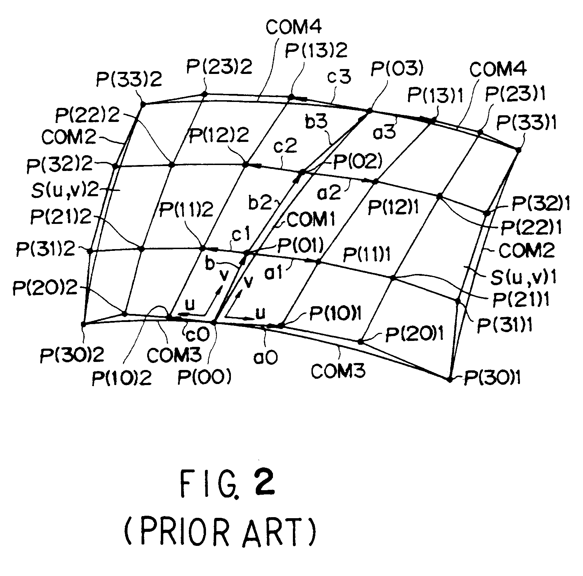

The principle of this free curved surface generating method is for example shown in Fig. 1, wherein patches to be attached to quadrilateral framing space are represented by vectors S(u,v), vector function of a third degree Bezier formula; control side vectors, vector a1, vector a2 and vector c1, vector c2 satisfying the continuity of tangential planes at the common boundary COM1 of adjoining patches, vector S(u,v)1 and vector S(u,v)2 are set on the basis of nodal points given by framing process, vector P(00), vector P(30)1, vector P(33)1, vector P(03), vector P(33)2, vector P(30)2 so that the two patches, vector S(u,v)1 and vector S(u,v)2 are smoothly connected; and, on the basis of these control side vectors, the internal control points, vector P(11)1, vector P(12)1 and vector P-

(11)2, vector P(12)2 are set over again.

By also applying such a technique to the other common boundaries COM2, COM3, COM4, the patches vector S(u,v)1 and vector S(u,v)2 may be smoothly connected consequently to their adjoining patches in accordance with the condition of continuity of tangential planes.

Here, the vector function, vector S(u,v), is represented by using parameters u and v in the u-direction and v-direction and shift operators E and F as in the following formula:

$$S(u,v) = (1-u+uE)^3 (1-v+vF)^3 P(00) \qquad (1)$$

and is related to the control points, vector P(ij) in the manner as in the following formulae:

$$E \cdot P(ij) = P(i+1 \, j)(i, j = 0, 1, 2) \qquad (2)$$

$$F \cdot P(ij) = P(i \, j+1)(i, j = 0, 1, 2) \qquad (3)$$

$$0 \leqq u \leqq 1 \qquad (4)$$

$$0 \leqq v \leqq 1 \qquad (5)$$

Further, a tangential plane refers to the plane formed by the tangential vectors in the v-direction and u-direction at each point on a common boundary, and the condition of continuity of tangential planes is met when for example the tangential planes of the patches, vector S(u,v)1 and vector S(u,v)2 are the same for each point on the common boundary COM1 as shown in Fig. 1.

According to this method, it is easy to design exactly as intended by the designer even such an object's contour as having a curved surface geometry changing smoothly as a whole that is in fact difficult to be designed by the conventional designing technique. There has been proposed a method of processing free curved surfaces in which products having the shape intended by a designer may be produced by forming a mold on the basis of the object's contour obtained in the manner as described.

Conventionally, in order to make a mold for products having free curved surface contour as described, as explained in US Patent No. 4,789,931, an NC (numerical control ) milling machine 1 for example of the type capable of concurrently controlled in three axial directions as shown in Fig. 2 is used so that a tool 5 such as a ball end mill adapted to be movable in the z-axis direction by a tool controlling section 4 including a motor is caused to abut against a mold 3 placed as a workpiece on an XY table 2. The processing patches of the XY table 2 and the tool 5 are generated by segment height method in which they may be obtained as a tool path data through which the edge center of tool 5 is moved on an offset curved surface formed from the free curved surface data on the basis of such data as the edge radius of the tool 5. A mold having free curved surface is machined by effecting control on movement in each of X-axis, Y-axis and Z-axis directions on the basis of such tool path data.

However, in the case of machining a processing region having a target contour SC, if as shown in Fig. 3 the tool 5 is lowered along the Z-axial direction (i.e. vertical direction) with respect to the target contour, there have been such problems as that, when the feeding rate of the tool 5 in the approach section toward the target contour is relatively high, an overshooting occurs where the approaching operation of the tool 5 does not stop even after reaching the height of processing region, excessively cutting the mold 3 specified as the workpiece at the starting point of cutting (hereinafter referred to as approach point), and further that an abrupt change in the moving direction at the approach point of the tool 5 having been approaching along the Z-axial direction causes a so-called cutter mark where traces of the cutting edge of tool 5 remain on the approach point of the worked surface.

As a solution to these problems, a method as shown in Fig. 4 may be considered in which the tool 5 is caused to approach the approach point in a predetermined circular arc.

This however has been inadequate as the solution, since, according to this method, the target contour may mistakenly be cut when for example a portion of the target contour exists within such circular arc approach path.

## SUMMARY OF THE INVENTION

In view of the foregoing, an object of this invention is to provide a method for producing a free curved surface capable of achieving a tool's approach path which does not cause a damage on the processing target geometry.

The foregoing object and other objects of the invention have been achieved by the provision of a free curved surface producing method for cutting a workpiece 3 into a free curved surface contour on the basis of free curved surface data $S(u,v)1$, $S(u,v)2$ representing the geometry of a free curved surface, the present invention comprises the steps of: preparing tool path data DTBM for cutting the workpiece 3 into a free curved surface contour SC specified as the processing target contour on the basis of the free curved surface data $S(u,v)1$, $S(u,v)2$ and tool information of a cutting tool 5, with respect to a cutting process region ARA where the cutting process of the processing target contour SC is effected and an approach region ARAP1 for moving the tool 5 to the cutting process region ARA; setting approach path data DTAPIN of the tool 5 so that a coincidence or approximation occurs between a processing start direction APD of the tool 5 at a cutting process starting point AP in the cutting process region ARA and the moving direction of the tool 5 when the tool 5 reaches the cutting process starting point AP in the approach region ARA; correcting the approach path data DATAPIN on the basis of the tool path data DTBM in the approach region ARAP1 so that the tool 5 does not come closer to the free curved surface contour SC specified as the processing target contour beyond the tool path represented by the tool path data DTBM in the approach region ARAP1; and cutting the workpiece 3 into the free curved surface contour SC by controlling the drive of the tool 5 on the basis of the corrected approach path data DTAP and the tool path data DTBM in the cutting process region ARA.

The approach path data DATAPIN is set such that, when the tool 5 is caused to approach the point AP for starting cutting of a target contour on the workpiece 3, the moving direction of the tool 5 reaching the target contour cutting process starting point AP substantially coincide the cutting process starting direction APD of the tool 5, and the approach path data DATAPIN is then corrected, on the basis of the tool path DTBM which has been prepared correspondingly to the cutting target contour SC on the workpiece 3 so as not to cause a tool interference, so that the tool 5 does not come closer to the processing target contour SC beyond the tool path DTBM. A tool interference may be avoided in the approach region ARAP1 for moving the tool 5 to the cutting start point AP and it is possible to prevent an excessive cutting on the target contour at the cutting start point AP.

The nature, principle and utility of the invention will become more apparent from the following detailed description when read in conjunction with the accompanying drawings in which like parts are designated by like reference numerals or characters.

## BRIEF DESCRIPTION OF THE DRAWINGS

In the accompanying drawings:
Fig. 1 is a side view showing the composition of an NC milling device;
Fig. 2 is a schematic view for explaining a free curved surface data;
Fig. 3 is a schematic view showing a vertical approach in the conventional methods;
Fig. 4 is a schematic view showing a circular-arc approach in the conventional methods;
Fig. 5 is a flowchart showing the processing procedure of an embodiment of the free curved surface producing method according to the present invention;

Fig. 6 is a schematic view for explaining the preparation of a tool path data; and

Fig. 7 is a view for explaining the preparation of an approach path data.

## DETAILED DESCRIPTION OF THE INVENTION

Preferred embodiments of this invention will be described with reference to the accompanying drawings:

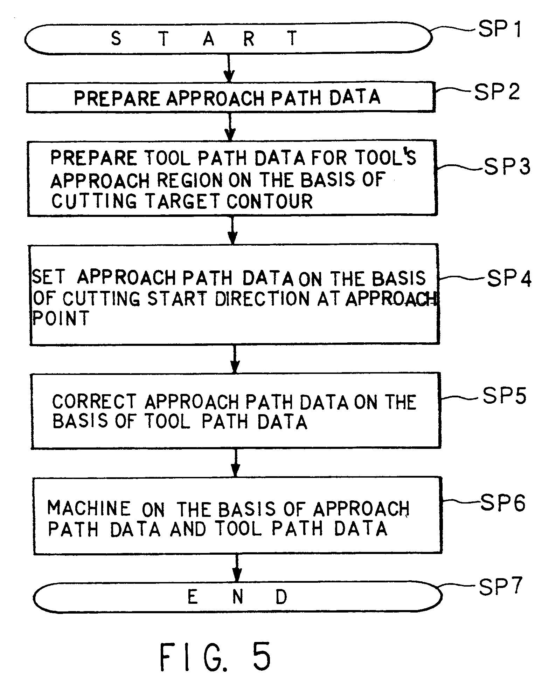

In the case of this free curved surface producing method, the central processing unit (CPU) of a tool path data preparing device reads free curved surface data (i.e. data on patches, vector S(u,v)1 and vector S(u,v)2 (Fig. 2) which is previously prepared by a free curved surface preparing device, and at step SP1 as shown in Fig. 5 starts the execution of free curved surface producing program to begin the producing procedure for preparing the approach path data DTAP of the tool on the basis of such free curved surface data, vector S-(u,v)1 and vector S(u,v)2.

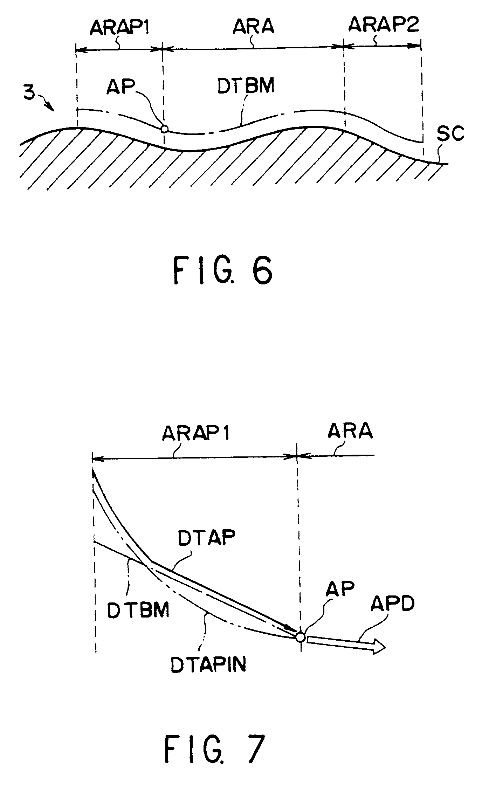

Thus at step SP2, tool path data DTBM through which the center of tool passes is prepared by the CPU for a cutting process region ARA as shown in Fig. 6 using for example the technique of segment height method on the basis of the free surface data, vector S(u,v)1 and vector S(u,v)2 (i.e. cutting target contour) and such tool information as edge shape and radius of the tool 5 (Fig. 2) to be used in the cutting process.

Subsequently, at step SP3, the CPU3 prepares on the basis of the cutting target contour the tool path data DTBM for a tool's approach region ARAP1 or ARAP2 to be provided at the front or back side of the cutting region ARA on the workpiece.

Further, at step SP4, the CPU waits until the user inputs an approach path of the tool 5 such that a substantial coincidence occurs between the moving direction of the tool 5 at an approach point AP to start cutting on the workpiece and the moving direction of the tool 5 immediately before reaching the approach point AP.

Thus, as shown in Fig. 7, the user provides the approach path input data DTAPIN of a circular arc form with which the moving direction of tool at the approach point AP become the actual machining start direction APD. The CPU then proceeds to the following step SP5 where, on the basis of the tool path data DTBM prepared at the above described step SP3, priority is given to the tool path data DTBM (i.e. the tool is set to move along the tool path data DTBM) when the approach path input data DTAPIN provided by the user is closer to the cutting target contour SC than the tool path data DTBM. While priority is given to approach path input data DTAPIN (i.e. the tool is set to move along the approach path input data DTAPIN) when the tool path data DTBM is closer to the cutting target contour SC than the approach path input data DTAPIN provided by the user.

Accordingly, as shown in Fig. 7, a corrected approach path data DTAP is obtained in which the tool is moved along the tool path data DTBM for a portion in the approach section ARAP1 where a tool interference occurs on the cutting target contour if for example the tool is moved along the approach path input data DTAPIN provided by the user.

Thus the tool may be moved along the approach path (DTAP) which does not cause a tool interference, since the tool path data DTBM is a data that is free from a tool interference.

At the next step SP6, the CPU moves the tool to the approach point AP on the basis of thus obtained approach path data DTAP and then moves the tool on the basis of the tool path data DTBM prepared at the above described step SP2 for the cutting process region ARA so that the workpiece is machined into the target contour SC at the cutting process region ARA, and then at step SP7 ends the free curved surface machine processing procedure.

In this way, in order not to cause an excessive cutting at the approach point AP, the provided approach path input data DTAPIN in corrected by using a previously calculated tool path data DTBM which does not cause a tool interference, whereby a tool interference may be avoided in the approach region ARAP1 and the tool may be moved along the approach path DTAP through which an excessive cutting at the approach point AP can be prevented as much as possible.

According to the arrangement as described above, the approach path input data DTAPIN is set by the user so as not to cause an excessive cutting at the approach point AP, and such approach path input data DTAPIN is then corrected on the basis of the tool path data DTBM for not causing tool interference that has been prepared by using the segment height method. An approach path data DTAP may be obtained such that, for a portion where a tool interference occurs in the approach region ARAP1, the tool may be moved on the basis of the tool path data DTBM which does not cause a tool interference, and at the same time an excessive cutting may be avoided at the approach point AP.

Accordingly, by moving the tool 5 along the approach path represented by the approach path data DTAP, the workpiece 3 may be cut into the free curved surface contour SC specified as the process target contour while both an excessive cutting at the approach point AP and a tool interference at the approach region ARAP1 are avoided.

It should be noted that, while in the above described embodiment the case has been described where the tool is caused to approach from the side of the approach region ARAP1 with respect to the machining region ARA, the present invention is not limited to this and it is possible to provide approach regions ARAP1 and ARAP2 on the both sides of cutting work region ARA so that machining can be effected from both sides.

Also, while in the above described embodiment the case has been described where the user provides the approach path input data DTAPIN, the present invention is not limited to this and a predetermined approach path may be provided by a calculating process on the basis of the machining start direction APD at the approach point AP.

Further, while in the above described embodiment the case has been described where the tool path data DTBM is calculated by the segment height method, the present invention is not limited to this and it may also be calculated by various other methods such as the grid height method.

Furthermore, while in the above described embodiment the present invention has been applied to the case of machining a mold, the present invention is not limited to this and may widely be applied to cases where products are directly machined.

As has been described, according to the present invention, when a tool is caused to approach the starting point of machining for target contour on workpiece, the moving direction of the tool reaching the starting point of machining is determined such that it substantially coincide the tool's starting direction for machining whereby an approach path is provided through which an excessive cutting is avoided at the starting point of machining, and such approach path is corrected on the basis of a tool path that has been prepared correspondingly to the cutting target contour on the workpiece so that an approach path may be achieved through which, wile preventing a tool interference, an excessive cutting is avoided at the starting point of machining.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

## Claims

1.  A free curved surface producing method for cutting a workpiece (3) into a free curved surface contour on the basis of free curved surface data representing the geometry of the free curved surface, comprising the steps of:

    preparing a tool (5) path data for cutting the workpiece (3) into said free curved surface contour specified as the producing target contour (SC), with respect to a cutting, process region where cutting process of the producing target contour (SC) is effected and an approach region for moving said tool to the cutting process region, on the basis of free curved surface data and tool information of the cutting tool (5);

    setting an approach path data of the tool (5) so as to cause a coincidence or approximation between a processing start direction of said tool (5) at a cutting process starting point in the cutting process region and the moving direction of the tool (5) when the tool reaches the cutting process starting point in the approach region;

    correcting said approach path data on the basis of the tool path data in the approach region for preventing the tool (5) from coming closer to the free curved surface contour specified as the producing target contour (SC) beyond the tool path represented by the tool path data in the approach region; and

    cutting said workpiece (3) into the free curved surface contour by controlling the drive of the tool (5) on the basis of the corrected approach path data and said tool path data in the cutting process region.

2.  The free curved surface producing method according to claim 1, said approach region is set in both sides of said cutting process region and said cutting tool (5) cuts said workpiece (3) from both side directions thereof.

3.  The free curved surface producing method according to claim 1, said tool path data being calculated by means of the segment height method or the grid height method.

F I G. **1**

F I G. 3 (PRIOR ART)

F I G. 4 (PRIOR ART)

# FIG. 2
# (PRIOR ART)

```
              ┌──────────────────────────────────┐
              │    S  T  A  R  T                  │────── SP1
              └──────────────────────────────────┘
                              │
                              ▼
              ┌──────────────────────────────────┐
              │  PREPARE APPROACH PATH DATA       │────── SP2
              └──────────────────────────────────┘
                              │
                              ▼
              ┌──────────────────────────────────┐
              │  PREPARE TOOL PATH DATA FOR TOOL'S│
              │  APPROACH REGION ON THE BASIS OF  │────── SP3
              │  CUTTING TARGET CONTOUR           │
              └──────────────────────────────────┘
                              │
                              ▼
              ┌──────────────────────────────────┐
              │ SET APPROACH PATH DATA ON THE BASIS│
              │ OF CUTTING START DIRECTION AT APPROACH│──── SP4
              │ POINT                             │
              └──────────────────────────────────┘
                              │
                              ▼
              ┌──────────────────────────────────┐
              │  CORRECT APPROACH PATH DATA ON THE│────── SP5
              │  BASIS OF TOOL PATH DATA          │
              └──────────────────────────────────┘
                              │
                              ▼
              ┌──────────────────────────────────┐
              │  MACHINE ON THE BASIS OF APPROACH │────── SP6
              │  PATH DATA AND TOOL PATH DATA     │
              └──────────────────────────────────┘
                              │
                              ▼
              ┌──────────────────────────────────┐
              │     E    N    D                   │────── SP7
              └──────────────────────────────────┘
```

# FIG. 5

FIG. 6

FIG. 7